# EUROPÄISCHE PATENTSCHRIFT

(11) **EP 3 730 826 B1**
(45) Veröffentlichungstag und Bekanntmachung des Hinweises auf die Patenterteilung: **23.03.2022**
(21) Anmeldenummer: 20171123.1
(22) Anmeldetag: 23.04.2020
(51) Int. Cl.: F16L 19/02

(54) **VERFAHREN ZUR HERSTELLUNG EINES ROHRES MIT VERBINDUNGSFLANSCH**
METHOD FOR PRODUCING A PIPE WITH CONNECTING FLANGE
PROCÉDÉ DE FABRICATION D'UN TUBE À BRIDE DE RACCORDEMENT

(30) Priorität: 24.04.2019 DE 102019110603
(43) Veröffentlichungstag der Anmeldung: 28.10.2020
(73) Patentinhaber: Liebherr-France SAS, 68005 Colmar Cedex (FR)
(72) Erfinder: Fritsch, Pascal, 68320 Artzenheim (FR)
(74) Vertreter: Laufhütte, Dieter

(56) Entgegenhaltungen:
- CN-A- 102 886 634
- DE-A1- 19 730 418
- DE-A1-102007 060 116
- DE-A1-102011 086 463
- US-A1- 2007 216 159

## Beschreibung

Die Erfindung betrifft ein Verfahren zur Herstellung eines Rohres mit Verbindungsflansch, wobei das Flanschteil mit einem stirnseitigen Rohrende verschweißt wird.

Rohre werden anwendungsabhängig unterschiedlich belastet. Insbesondere bei Hydraulikapplikation kommt es aufgrund von starken Lastwechseln zu hohen Druckschwankungen, weshalb gerade an Hydraulikrohre hohe Festigkeitsanforderungen gestellt werden. Eine Schwachstelle sind hier vor allem Schweißverbindungen wie bspw. im Bereich des Flanschansatzes eines Rohres. Aufgrund der ständigen hohen Lastwechsel kann es hier sehr schnell zur Materialermüdung kommen. Deswegen müssen hergestellte Schweißverbindungen stets zu 100% geprüft werden, was in der Praxis durch aufwändige Ultraschalluntersuchungen erfolgt. Die CN102886634 A beschreibt ein Verfahren zur Herstellung eines Rohrs mit Verbindungsflansch nach dem Oberbegriff des Anspruch 1. Die US2007216159 A1 beschreibt ein Verfahren zur Verschweißung zweier Rohrstücke miteinander.

Zur Qualitätssicherung der herzustellenden Schweißverbindungen wird auf das sog. TIG-Schweißen (Wolfram-Inertgas-Schweißen) zurückgegriffen. Dazu werden Rohr und Flanschteil horizontal in einer Anlage eingespannt und die Schweißapparatur wird um 360° um die Schweißnaht geführt, während dessen eine Mehrzahl von Schweißlagen (zum Beispiel: insgesamt mindestens vier Schweißlagen) mit dem vergleichsweise langsamen TIG-Schweißverfahren aufgebracht werden. Die Ausführung mehrerer Schweißlagen ist jedoch sehr zeitaufwendig und verursacht demzufolge hohe Produktionskosten. Es besteht daher der Wunsch nach einem günstigeren Herstellungsverfahren für das Schweißen von Rohren, insbesondere Hydraulikrohren.

Gelöst wird diese Aufgabe durch ein Verfahren gemäß den Merkmalen des Anspruchs 1, wobei sich vorteilhafte Ausgestaltungen des Verfahrens aus den abhängigen Ansprüchen ergeben.

Erfindungsgemäß wird vorgeschlagen, dass im Bereich des Flanschansatzes wenigstens ein Überstand des Rohres oder des Flanschteiles vorgehalten wird. Dieser Überstand legt sich beim Zusammenführen des Rohres und des Flanschteils an die Innenwandung des gegenüberliegenden Teils an. Ist der Überstand beispielsweise Bestandteil des Rohres, so legt sich dieser an die Innenwandung des Flanschteils an. Gleiches gilt für den Fall, wenn der Überstand Bestandteil des Flanschteils ist. Beim Zusammenführen legt sich dieser an den Innendurchmesser des Rohres an. Der Überstand bildet also eine Art Abdeckung der Schweißfuge zwischen Rohr und Flanschteil, d.h. die gebildete Verbindungsnaht ist in Richtung des Rohrinnenraums abgedeckt. Dadurch kann verhindert werden, dass während des Schweißprozesses über die Schweißfuge Schweißgut nach innen in das Rohr eindringen kann und es zum ungewollten Durchschweißen kommt.

Dies schafft die notwendigen Voraussetzungen um anstatt des zeitaufwändigen TIG-Schweißverfahrens ein alternatives Schweißverfahren einsetzen zu können, das einen schnelleren und kostengünstigeren Schweißprozess für solche Rohre ermöglicht.

Gemäß einer vorteilhaften Ausgestaltung kann das Rohr und Flanschteil nunmehr mittels MAG-Schweißverfahren (Metallaktivgasschweißen) zusammengefügt werden. Dazu werden beide Verbindungsteile, d.h. Flanschteil und Rohr von außen miteinander verschweißt. Ein Einfallen von Schweißgut wird durch den Überstand verhindert.

Insbesondere kann bei Anwendung des MAG-Schweißverfahren eine einzelne Schweißlage ausreichend sein, um die beiden Teile, d.h. das Rohr und das Flanschteil, zusammenzufügen. Die Bearbeitungszeit verkürzt sich dementsprechend deutlich. Erfahrungsgemäß kann diese um einen Faktor 10 gegenüber konventionellen Verfahren (TIG-Schweißvorgangs) beschleunigt werden.

Ein weiterer Vorteil der Erfindung besteht darin, dass der Überstand gemäß einer bevorzugten Ausführung ebenfalls als Zentrierhilfe beim Zusammenführen von Rohr und Flanschteil dient. Beispielsweise wird durch den Überstand eine entsprechende Anschlagkante gebildet, sodass beide zu verschweißenden Rohrteile passgenau zusammengeführt werden können. Dadurch, dass sich der Überstand an den Innendurchmesser des gegenüberliegenden Teils anlegen muss, ist eine bündige Positionierung beider Teile gewährleistet.

Gemäß einer weiterhin vorteilhaften Ausführungsform der Erfindung kann der Überstand als zusätzlicher Schweißzusatzwerkstoff dienen. Demzufolge wird nicht nur von oben in die Schweißfuge Schweißzusatzwerkstoff eingebracht, sondern der Überstand wird somit ebenso erhitzt und mit dem gegenüberliegenden Teil verschmolzen.

Gemäß der Erfindung ist außerdem vorgesehen, dass das Rohr oder alternativ das Flanschteil eine radial nach außen abgeschrägte Stirnfläche umfasst. Beim Zusammenführen der beiden Teile bildet sich somit eine V-förmige Schweißfuge, die während des Schweißvorgangs mit dem notwendigen Schweißgut gefüllt werden kann. Hierbei ist weiterhin vorgesehen, daß am Rohr oder alternativ am Flanschteil eine mehrstufige Fugenkante ausgebildet wird, die idealerweise an der zum Rohrinnenraum zugewandten Kante der Stirnfläche des Rohres oder des Flanschteils ausgebildet ist. Die radial innerste Stufe, d.h. die im Bereich des Rohrinnenraums, bildet hierbei den Überstand, während die radial äußere Stufe beim Zusammenführen den Boden der Schweißfuge darstellt.

Wie bereits vorstehend erläutert eignet sich das vorgenannte Herstellungsverfahren insbesondere zur Herstellung eines Hydraulikrohrs, d.h. zur Anbringung eines entsprechenden Flanschteils an einem für die Hydraulik vorgesehenen Rohr.

Weitere Vorteile und Eigenschaften der Erfindung sollen nun im Folgenden anhand eines konkreten Ausführungsbeispiels näher erläutert werden.

Es zeigen:
- Figur 1:: eine Skizze eines konventionellen Hydraulikrohrs im Bereich des Flanschansatzes und
- Figur 2:: eine entsprechende Skizze eines Hydraulikrohrs gemäß der erfindungsgemäßen Fertigung.

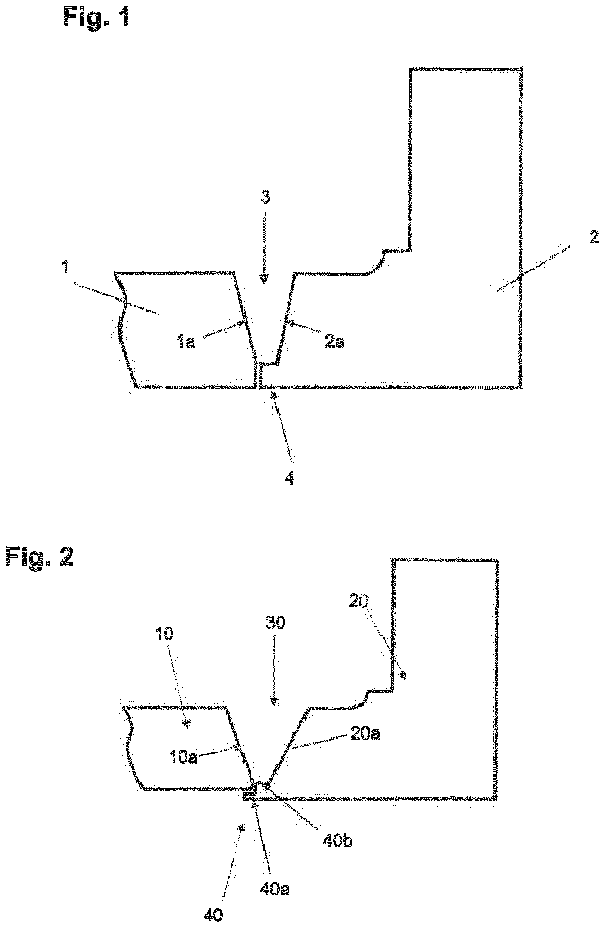

Figur 1 zeigt eine Skizze des stirnseitigen Endes eines Hydraulikrohrs 1, das nach konventionellem Herstellungsverfahren gefertigt wird. An dem gezeigten Ende soll das ebenso dargestellte Flanschteil 2 angeschweißt werden. Erkennbar ist hier, dass sowohl das Hydraulikrohr 1 als auch das Flanschteil 2 eine in Radialrichtung nach außen abfallende Kontaktkante 1a, 2a aufweisen. Dadurch wird beim Positionieren der beiden Teile 1, 2 für den Schweißvorgang eine V-förmige Schweißfuge 3 gebildet. Die Kontaktkante 2a des Flanschteils 2 weist am radial innen liegenden Bereich eine Stufe 4 auf, die beim Zusammenführen der beiden Teile 1, 2 den Boden der V-förmigen Fuge 3 bildet.

Da bei dieser Ausgangssituation die Gefahr besteht, dass es Bereich der Kontaktstelle zwischen Rohr 1 und Flanschteil 2, d.h. im Bereich der Stufe 4 zum Durchschweißen kommt und dadurch Schweißgut in das Rohrvolumen eindringen kann, werden sequentiell mehrere Schweißlagen mittels des langsamen TIG-Schweißverfahren aufgebracht.

Figur 2 zeigt nun den erfindungsgemäßen Ansatz für ein neuartiges Herstellungsverfahren von Hydraulikrohren. Hierbei wird das Hydraulikrohr 10 zunächst mit einer teilweisen geraden und teilweisen angeschrägten Kontakt- bzw. Stirnkante 10a gefertigt und das Flanschteil 20 wird wiederum mit einer radial nach außen abfallende Kontaktkante 20a hergestellt. Am radial inneren Bereich der Kontaktkante 20a ist zudem eine Doppelstufe 40 ausgeprägt, deren radial innerste Stufe 40a einen Überstand bildet und deren radial weiter außen gelegene Stufe 40b den Boden der Schweißfuge 30 beim Zusammenführen der Teile 10, 20 bildet.

Die den Überstand bildende Stufe 40a legt sich beim Zusammenführen der Teile 10, 20 an die Innenwandung des Rohres 10 an, wodurch die Kontaktstelle der Schweißfuge 30 zum Rohrinneren durch die anliegende Stufe 40a verschlossen wird. Hierdurch wird sichergestellt, dass kein Schweißgut während des Schweißvorgangs nach innen in das Rohrinnere eindringen kann. Zum anderen dient die doppelgestufte Ausprägung der Kontaktkante 20a gleichzeitig als Positionierhilfe beim Zusammenführen der Teile 10, 20. Die zwischen den Stufen 40a, 40b liegende Setzstufe dient erfindungsgemäß als Anschlag in Längsrichtung des Rohres, während die Stufe 40a einen Anschlag in Radialrichtung bildet. Dadurch wird eine passgenaue und bündige Positionierung des Flanschteils 20 relativ zum Rohrteil 10 vereinfacht.

Die gezeigte Konstruktion des Flanschteils 10 mit dem Überstand 40a schafft die notwendige Voraussetzung, um statt dem zeitaufwendigen TIG-Schweißverfahren auf das schnellere MAG-Schweißverfahren zurückgreifen zu können. Während des Schweißprozesses wird die Schweißfuge 30 mit Schweißgut gefüllt. Hierbei kommt auch zugute, dass der Überstand 40a ebenfalls als zusätzliches Schweißgut dient und mit dem Rohrteil 10 verschmolzen wird.

## Patentansprüche

1. Verfahren zur Herstellung eines Rohres (10) mit Verbindungsflansch, wobei das Flanschteil (20) mit einem stirnseitigen Rohrende verschweißt wird, wobei im Bereich des Flanschansatzes wenigstens ein Überstand (40a) des Rohres (10) oder des Flanschteils (20) vorgesehen wird, der sich beim Zusammenführen des Rohrs (10) und des Flanschteils (20) an die Innenwandung des anderen Teils anlegt, um die gebildete Schweißfuge (30) zum Rohrinneren abzudecken, und anschließend das Rohr (10) und das Flanschteil (20) miteinander verschweißt werden, wobei Rohr (10) und/oder Flanschteil (20) eine radial nach außen abfallende schräge Stirn- bzw. Kontaktfläche (10a, 20a) aufweisen, wodurch beim Zusammenführen des Rohrs (10) und Flanschteils (20) eine Schweißfuge (30) gebildet wird,
**dadurch gekennzeichnet,**
**dass** die Kontaktkante des Rohrs (10) oder Flanschteils (20) einen mehrstufigen Verlauf (40) vorsieht, wobei eine radial innerste Stufe (40a) den Überstand und eine radial weiter außen liegende Stufe (40b) den Boden der gebildeten Schweißfuge (30) bildet, wobei eine zwischen den Stufen 40a, 40b liegende Setzstufe als Anschlag in Längsrichtung des Rohres dient.

2. Verfahren nach Anspruch 1, **dadurch gekennzeichnet, dass** Rohr (10) und Flanschteil (20) mittels MAG-Schweißverfahren zusammengefügt werden, wobei die Teile am Rohraussenumfang miteinander verschweißt werden.

3. Verfahren nach Anspruch 1 oder 2, **dadurch gekennzeichnet, dass** die Teile in einer Schweißlage verschweißt werden.

4. Verfahren nach einem der vorhergehenden Ansprüche, **dadurch gekennzeichnet, dass** der Überstand (40a) als Zentrierhilfe beim Zusammenführen von Rohr (10) und Flanschteil (20) dient.

5. Verfahren nach einem der vorhergehenden Ansprüche, **dadurch gekennzeichnet, dass** der Überstand (40a) als Schweißzusatzwerkstoff dient.

6. Verfahren nach einem der vorhergehenden Ansprüche, **dadurch gekennzeichnet, dass** das Rohr (10) ein Hydraulikrohr ist.

## Claims

1. A method of manufacturing a pipe (10) having a connecting flange, wherein the flange part (20) is welded to an end face pipe end, wherein at least one protrusion (40a) of the pipe (10) or of the flange part (20) is provided in the region of the flange hub and contacts the inner wall of the other part on the joining together of the pipe (10) and the flange part (20) to cover the formed weld joint (30) to the pipe interior; wherein the pipe (10) and the flange part (20) are subsequently welded to one another, and wherein the pipe (10) and/or the flange part (20) have a radially outwardly declining slanted end face or contact face (10a, 20a), whereby a weld joint (30) is formed on the joining together of the pipe (10) and the flange part (20),
**characterized in that**
the contact edge of the pipe (10) or of the flange part (20) provides a multistage extent (40), with a radially innermost step (40a) forming the protrusion and a radially further outwardly disposed step (40b) forming the base of the formed weld joint (30), and with a riser disposed between the steps (40a, 40b) serving as an abutment in the longitudinal direction of the pipe.

2. A method in accordance with claim 1, **characterized in that** the pipe (10) and the flange part (20) are joined together by means of a MAG welding process, with the parts being welded to one another at the outer pipe circumference.

3. A method in accordance with claim 1 or claim 2, **characterized in that** the parts are welded in a welding layer.

4. A method in accordance with one of the preceding claims, **characterized in that** the protrusion (40a) serves as a centering aid on the joining together of the pipe (10) and the flange part (20).

5. A method in accordance with one of the preceding claims, **characterized in that** the protrusion (40a) serves as a weld additive.

6. A method in accordance with one of the preceding claims, **characterized in that** the pipe (10) is a hydraulic pipe.

## Revendications

1. Procédé de fabrication d'un tube (10) à bride de raccordement, dans lequel la partie bride (20) est soudée à une extrémité de tube côté frontal, dans lequel au moins une saillie (40a) du tube (10) ou de la partie bride (20) est prévue dans la zone du rebord de la bride, ladite saillie s'appliquant contre la paroi intérieure de l'autre partie lors de la réunion du tube (10) et de la partie bride (20) pour recouvrir la rainure de soudage (30) formée en direction de l'intérieur du tube, et le tube (10) et la partie bride (20) sont ensuite soudés l'un à l'autre, le tube (10) et/ou la partie bride (20) comportant une surface frontale ou de contact (10a, 20a) oblique s'inclinant radialement vers l'extérieur, moyennant quoi une rainure de soudage (30) est formée lors de la réunion du tube (10) et de la partie bride (20),
**caractérisé en ce que**
l'arête de contact du tube (10) ou de la partie bride (20) prévoit un tracé (40) à plusieurs marches, une marche (40a) la plus à l'intérieur dans le sens radial formant la saillie et une marche (40b) se trouvant davantage à l'extérieur dans le sens radial formant le fond de la rainure de soudage (30) formée, une contremarche située entre les marches (40a, 40b) servant de butée dans la direction longitudinale du tube.

2. Procédé selon la revendication 1, **caractérisé en ce que** le tube (10) et la partie bride (20) sont assemblés par procédé de soudage MAG, les parties étant soudées l'une à l'autre sur la circonférence extérieure du tube.

3. Procédé selon la revendication 1 ou 2, **caractérisé en ce que** les parties sont soudées en une passe de soudure.

4. Procédé selon l'une des revendications précédentes, **caractérisé en ce que** la saillie (40a) sert d'aide au centrage lors de la réunion du tube (10) et de la partie bride (20).

5. Procédé selon l'une des revendications précédentes, **caractérisé en ce que** la saillie (40a) sert de métal d'apport.

6. Procédé selon l'une des revendications précédentes, **caractérisé en ce que** le tube (10) est un tube hydraulique.
